# EUROPEAN PATENT SPECIFICATION

(11) **EP 2 804 766 B1**
(45) Date of publication and mention of the grant of the patent: **23.03.2016**
(21) Application number: 13700527.8
(22) Date of filing: 09.01.2013
(51) Int. Cl.: B42C 15/00, B29C 65/74, B29C 65/18, B29C 65/78

(54) **MACHINE FOR COVERING BOOKS AND THE LIKE**
MASCHINE ZUM UMHÜLLEN VON BÜCHERN UND DERGLEICHEN
MACHINE POUR COUVRIR DES LIVRES ET SIMILAIRES

(30) Priority: 20.01.2012 IT MI20120056
(43) Date of publication of application: 26.11.2014
(73) Proprietor: RI. Plast S.r.l. Dei F. LLI Rioli, 20010 Pogliano Milanese (MI) (IT)
(72) Inventor: RIOLI, Angelo, I-20017 Rho (MI) (IT); TORRI, Matteo, I-22020 Faggeto Lario (CO) (IT)
(74) Representative: Zanoli, Enrico
(86) International application number: PCT/EP2013/050277
(87) International publication number: WO 2013/107674

(56) References cited:
- DE-U1-202009 012 783
- IT-A1- MI20 081 489

## Description

The present invention concerns a machine for covering paper articles. In particular, the present invention concerns a machine for covering books, exercise books and similar with a sheet of flexible thermoplastic material.

The application of a cover, or outer cover, to articles made mainly of paper material, such as books, exercise books and similar by the user-owner of said articles is a very widespread and effective practice to protect them from wear.

Various types of covers are known for books, exercise books, albums and similar. The simplest consists of a sheet, made of various materials according to requirements, which is folded and cut to adapt to the size and thickness of the article to be covered. A further type is a ready-to-use sheet which only has to be applied to the article as it is already produced with the size suitable for the article to be covered.

In the case of a cover obtained from a sheet of paper or flexible plastic material, the user has to cut, fold and glue said sheet to manually create the cover in the size suitable for the book. In this case the main drawback is the considerable waste of time in manual application of the cover by the user, in addition to the fact that the latter must have good manual ability.

The application of covers or outer covers on paper material such as books, exercise books, albums and similar directly by the stationer or bookseller has therefore become a widespread practice, especially in the case of school textbooks. In this case, the number of books to be covered at the beginning of the school year is considerable, and therefore the purchaser of the book is willing to pay a reasonable surcharge in order to receive the books already covered and ready for use.

This widespread demand to purchase books already covered by the stationer/bookseller has led to the need for a machine that automates wholly or partly the application of the cover to the books, thus speeding up the work of the stationer.

The international patent application WO 03/004282 A1 describes a machine for the application of a flexible plastic cover to books and similar. Said machine consists of detachable parts so that it can be disassembled and therefore easily transported, in particular from a work surface to which a unit comprising a blade for cutting and hot sealing sheets of plastic material is connected by means of pins. More specifically, the cutting and sealing blade is supported by a pair of U-shaped flexible elements which allow an operator, via levers provided, to manually lower the blade and push it against a counter-blade to heat-cut a sheet for covering a book positioned between them. Said U-shaped elements are made of elastic material which elastically moves the blade away from the counter-blade when the manual action of an operator ceases.

The main drawback of said machine is the need for manual operation of the blade, which does not allow automation of the application of said covers. In fact, said equipment does not comprise electro-mechanical actuators but the simple use of levers and elastic elements which bring the blade and counter-blade into contact, thus obtaining cutting.

The Italian patent application MI2008A001489 describes equipment for covering books and similar comprising command and control means to define blade heating cycles and translation of the support so as to bring the blade into contact with the flexible thermoplastic sheet and perform the cutting operation. The equipment therefore comprises a linear electro-mechanical actuator to move the blades when a heating cycle of the blade is performed, according to modes and times programmed via the circuit integrated in the board.

The main drawback of said equipment is that it is impossible to accurately determine the heating temperature of the blade. The blade undergoes a thermal cycle for the administration of heat which is interrupted when a set time has elapsed, regardless of the temperature reached.

DE 20 2009 012 783 U1 discloses a cutting and sealing device provided with a cutting and welding bar of overlapping films for film packaging machines. The device has a cutting blade with a wedge-shaped cross-section, and sealing rails connected with a common centre of curvature. The cutting and sealing device does not comprise means for controlling the temperature and the operating position of the cutting blade.

Therefore a need is felt for a machine for covering books and the like, which eliminates or reduces the drawbacks of the known equipment, and in particular which reduces the extent of the manual intervention of an operator in the application of covers or outer covers to books, and the like.

It is desirable for said machine to allow heat-sealing and cutting of any type of flexible thermoplastic material in any thermal conditions.

It is furthermore desirable for said machine to allow effective long-lasting heat sealing to be obtained.

Lastly, it is desirable for said machine to be inexpensive and quick to produce, using the least number of components. In particular, it is desirable for the components used in production of the machine to minimise wear of the same.

The aim of the present invention is therefore to provide a machine for covering paper articles by means of a sheet of flexible thermoplastic material which minimises the drawbacks of the known equipment, as previously described.

In the context of the above-mentioned aim, one object of the present invention is to provide a machine for covering paper articles by means of a sheet of flexible thermoplastic material offering the maximum automation possible for the operations necessary to obtain said cover. A further object of the present invention is to provide a machine for covering paper articles which allows accurate regulation of the temperature of the cutting tool for obtaining the heat sealing of any flexible thermoplastic material and in any thermal conditions.

A further object of the present invention is to provide a machine for covering paper articles able to minimise movement of the sheet in the operational phase, limiting the movements and the creation of air bubbles in the heat-sealed portion.

The above-mentioned objects are achieved by a machine for covering paper articles with a sheet of flexible thermoplastic material, comprising:
- cutting means, comprising a bar provided with a heatable cutting tool able to assume an operating position, in contact with the sheet, and a non-operating position, outside contact with the sheet;
- control means, able to define the operating position of the cutting tool for the heat sealing and/or cutting of the sheet;
the machine being characterised in that it comprises means for controlling the cutting tool temperature, operatively connected with the control means for defining the operating position when a set temperature threshold is reached by the cutting tool.

In this way practically total automation of the heat sealing and cutting operations is obtained, effectively controlling the temperature of the cutting tool.

Preferably the temperature control means comprise at least one temperature sensor applied and/or operatively connected to the cutting tool. Even more preferably, the temperature control means comprise at least one thermocouple applied on the cutting tool.

In this way accuracy and minimisation of systematic errors in detection of the above-mentioned temperature are guaranteed.

Preferably the machine furthermore comprises means for adjustment of the temperature threshold by the user, operatively connected with the control means.

In this way the temperature of the cutting tool can be regulated in relation to the different materials that can be used for the heat sealing. This possibility allows different temperatures to be set for heating of the cutting tool, allowing heat sealing to be obtained on any type of flexible thermoplastic material, increasing the possibilities of use of said machine. Furthermore the possibility of accurately determining the heating temperature allows use of the machine in very different ambient conditions while maintaining the same optimal heat sealing characteristics.

Preferably the machine furthermore comprises timing means, operatively connected with the control means, for determining the time the cutting tool is maintained in the operating position, said time being determined by the pre-defined temperature threshold and/or by the type of thermoplastic material to be used.

In this way automation of the necessary operations is furthermore optimised, as the time is determined by the variables relative to the type of heat-sealable material used and, therefore, by the temperature to which the cutting tool is heated.

Preferably the cutting tool is a blade which extends, at least partially, along the extent of the bar.

In this way the cutting and heat sealing obtained are uniform and accurate.

Preferably the cutting means comprise means for partially covering at least one side of the cutting tool, to allow detachment of the heat-sealed sheet when the tool returns to the non-operating position. Even more preferably, the covering means are integrally connected with and partially cover both sides of the cutting tool.

In this way the heat-sealed sheet is easily detached from the cutting tool, without the use of further manual operations and without leaving residues on the cover produced.

Preferably the cutting means comprise pressure means provided on at least one side of the cutting tool to contact and/or block the sheet.

In this way blocking of the sheet is guaranteed in the operating condition, guaranteeing effective and long-lasting heat sealing.

Preferably the pressure means follow the movement of the cutting tool.

In this way the movement of the cutting tool is exploited for movement of the pressure means, minimising the number of components required.

Alternatively the pressure means are mobile with respect to the cutting tool.

In this way the sheet can be blocked before the cutting tool contacts the same, avoiding the introduction of air bubbles into the heat sealing portion.

Preferably the pressure means are provided on both sides of the cutting tool.

In this way the sheet is effectively blocked and it is impossible to introduce foreign elements and air bubbles into the heat sealing portion.

Further characteristics and advantages of the present invention will be evident from the description of the preferred embodiments, illustrated by way of non-limiting example in the accompanying figures, in which:
- Figure 1 is a schematic view in section of a first embodiment of the machine for covering paper articles according to the present invention;
- Figure 2A is a schematic view in section of the machine of Figure 1, highlighting the control means, selector means and temperature sensor;
- Figure 2B is a schematic view in section of the cutting means of Figure 1, when moving towards the operating position;
- Figure 3 is a schematic view in section of a second embodiment of the machine according to the present invention, when the cutting means are provided on one side with pressure means integrally connected with the same;
- Figure 4 is a schematic view in section of a third embodiment of the machine according to the present invention, when the cutting means are provided on both sides with pressure means integrally connected with the same;
- Figure 5A is a schematic view in section of a fourth embodiment of the machine according to the present invention, when the cutting means are provided on both sides with pressure means mobile with respect to the same and in the non-operating position;
- Figure 5B is a schematic view in section of the embodiment of Figure 5A when the cutting means are in the non-operating position while the pressure means are in the operating position;
- Figure 5C is a schematic view in section of the embodiment of Figure 5A when the cutting means and the pressure means are in the operating position.

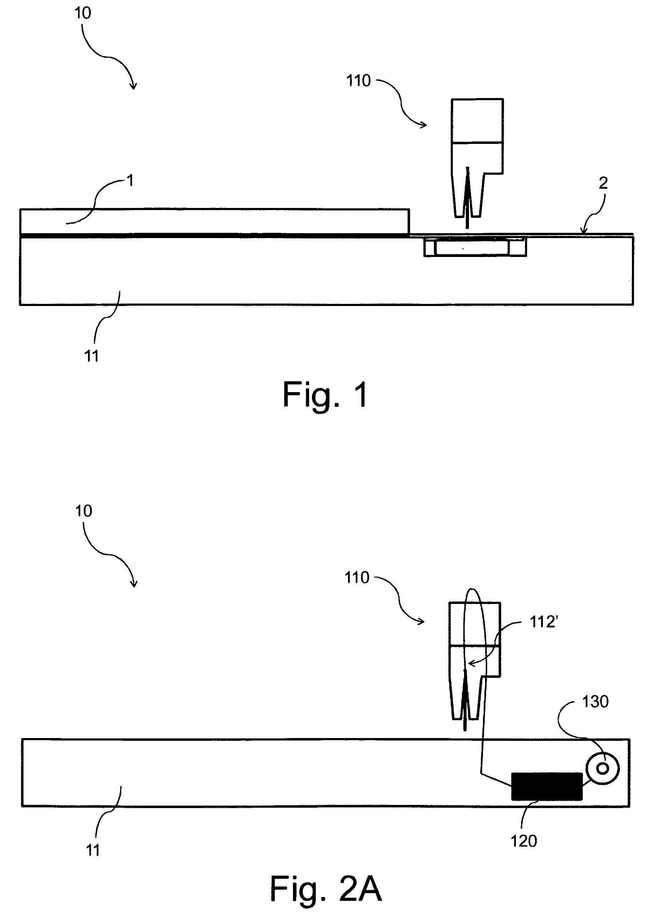

Figures 1-2B illustrate the machine 10 for covering paper article 1 with a sheet 2 of flexible thermoplastic material. This comprises a base 11 with an upper surface on which the sheet 2 rests, which is made of flexible thermoplastic material adapted to form the cover or outer cover of paper article 1, such as a book or the like.

The machine 10 comprises cutting means 110 located in the region of the distal upper surface with respect to the operator. The cutting means 110, in the embodiment described, comprise a bar 110', preferably metallic, provided with a heatable cutting tool 112, located in the lower portion of the bar 110' at the level of the supporting surface of the base 11. The bar 110' consists of a rectangular frame, preferably made of metallic material, in which the cutting tool 110 is inserted, in a position above the supporting surface of the base 11 for the sheet 2 to be cut, and a supporting frame (not illustrated) which connects it to the base 11. The vertical sides of the supporting frame are inserted in appropriate vertical guides (not illustrated) adapted to maintain the vertical position and avoid misalignments of the bar 110' during the translation movement.

The bar 110', and consequently the blade 112, can be translated in a vertical direction, i.e. perpendicular to the surface of the base 11, by means of an electromechanical actuator (not illustrated) positioned inside the machine 10. The electromechanical actuator is preferably of the screw - nut screw coupling type. A worm is operated by an electric motor. The worm is coupled to a nut screw fastened in a cylindrical hole of the lower side of the bar 110' of the blade 112. The rotation of the worm therefore determines the linear translation of the nut screw and the supporting frame. The direction of the rotation is reversible so that the blade 112 can be raised to a position outside contact with the work surface, or lowered to bring it into contact with the work surface and the sheet 2 to be cut.

Many types of electromechanical actuators are commercially available which differ from the screw - nut screw type previously described but can equally be used for translation of the blade 112 of the present invention.

The control means 120, illustrated in Figure 2A, comprise a programmable integrated circuit, inserted in the base 11. Said control means are able to define the operating position of the cutting tool 112 for the heat sealing and subsequent cutting of the sheet 2.

The cutting tool 112 is produced by means of a blade which extends throughout the extent of the bar 110'. Alternatively, said blade can extend even only partially along the extent of said bar 110'. The blade 112 is made of conducting material such as metal or appropriate metal alloy, for example Ni-Cr steel, such as to ensure adequate mechanical resistance and at the same time good thermal conductivity which allows rapid heating to obtain the heat sealing. If the bar is made of metallic material, the groove in which the blade 112 is inserted is coated in a layer of insulating material. Alternatively, as will be evident to a person skilled in the art, the entire support of the blade 112 can be made of insulating material. The same blade 112 is connected by means of cables to an electrical board comprising a programmable integrated circuit, part of the control means 120, and a transformer. The electrical components of the machine 10 are powered at low voltage (24V).

Furthermore, the machine 10 comprises means for controlling the temperature of the cutting tool 112. Said means, in the embodiment described here, are provided by a thermocouple 112' applied on the blade 112 providing the cutting tool. Said thermocouple is operatively connected to the control means to define the operating position when a pre-set temperature threshold is reached, heating the blade 112. Alternatively, different temperature sensors could equally be used even not directly in contact with the cutting tool but operatively connected with it, such as optical sensors.

The temperature threshold is set by means 130 for adjustment of the temperature threshold by the user. The means 130 are operatively connected with the control means 120. In the embodiment described here, these are provided by means of an analogical manual step selector command, located at the side of the bar 110'. Alternatively, said control can be of continuous type or furthermore can be digitalised and can entail the use of a display.

The temperature values set and detected during the operating period are used by the timer means, operatively connected with the control means 120, for determination of the time the cutting tool 112 is maintained in the operating position. In the embodiment described, these are provided directly by the control means 120 by software programming of the integrated circuit.

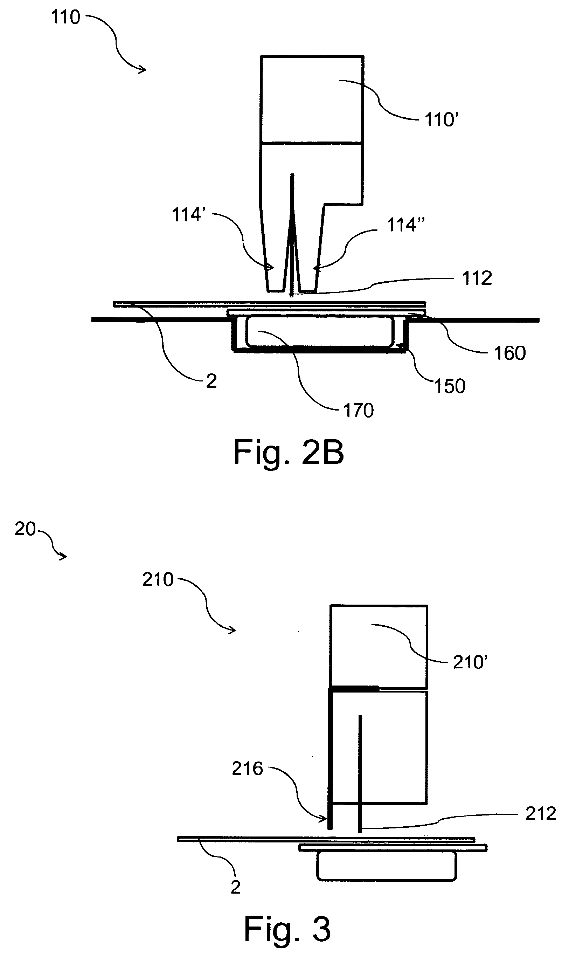

As illustrated in Figure 2B, the cutting means 110 furthermore comprise means 114', 114" for partial covering of both sides of the cutting blade 112, to allow detachment of the heat-sealed sheet 2 when said blade 112 returns to the non-operating position. Said covering means 114', 114" are integrally connected with the blade 112, leaving uncovered only the terminal portion of the same at the level of the sheet 2 to be heat-sealed, and produced as part of the bar 110' but in non-metallic material. In particular, the shape of the covering means 114', 114" creates two support portions for the heat-sealed sheet 2 resulting in folding of the sheet 2, which permits the detachment thereof. Furthermore, the detachment is guaranteed by the non-stick material used to produce said covering means 114', 114". Said means 114', 114" can be equally produced in non-conducting material to insulate the metallic blade 112 from the remaining part of the structure of the machine 10 and, in particular, from the supporting frame.

The machine 10 is furthermore provided with a cavity 150 on the base 11 in the vicinity of the blade 112. This allows the insertion of a soft deformable element 170, made of silicone in the present invention, to absorb part of the load produced by the blade 112 during the vertical translation. Above the element 170, a layer 160 of non-stick material is positioned. In this way, therefore, the blade 112 is free to translate also beyond the work surface of the base 11, causing deformation of the element 170 and the layer 160 without adhering to the same due to the non-stick properties of said layer 160.

The operations necessary for covering the book 1 are described below. The book 1 is placed on the sheet 2, positioned on the base 11, by an operator located in the vicinity of said base 11. The size of the sheet 2 usually exceed that of the book 1, hence the sheet 2 has to be appropriately folded so as to envelop the cover of the book 1 and the part of the sheet 2 exceeding the required size must be cut. Preferably the sheet 2 is formed with at least one edge folded to form a pocket in which to insert the cover of the book 1. Cutting of the excess part of the sheet 2 and trimming of the edges are operations performed automatically by the machine 10 according to the invention.

In the same way, the book 1 could be covered by means of a portion of roll (not illustrated) made of thermoplastic material provided and detached, once the covering operation has been completed, by the machine 10, according to the present invention. To facilitate winding of the same around the cover, said roll could advantageously be provided with one or more overlapped portions adapted to facilitate and speed up insertion of the cover of the book 1 to be covered. In this case the operations for folding the sheet on the cover are not necessary, thus speeding up the subsequent operations, as described below.

In relation to the thermoplastic material of the sheet 2 to be used for the cover, the operator determines the temperature threshold to which the blade 112 must be heated, adjusting the latter via the analogical selector 130 previously described.

The sheet 2 is cut by switching on the machine 10 via a control button (not illustrated), which starts the heating of the blade 112 and subsequent vertical translation of the bar 110' and, simultaneously, of the blade 112 according to procedures and times programmed via the integrated circuit of the control means. Starting of the cycle determines heating of the blade 112 up to the set temperature which is measured by means of the thermocouple applied on the blade 112, sending the values detected to the control means 120. Once the temperature has been reached, the control means 120 command the downward translation of the cutting means and, therefore, of the blade 112 and the covering means 114', 114" integrally connected to it. The time the heated blade 112 remains in contact, in the operating position, is determined by the pre-defined temperature threshold and by the type of thermoplastic material used. The thermoplastic material can be identified either by programming the control means 120 or by means of a selector (not illustrated) if provided.

Typically, after approximately 1.5 seconds of contact between the hot blade 112 and the sheet 2 of thermoplastic material, cutting of the same is completed. As specified previously, said period of contact can be shorter or longer in relation to the characteristics of the thermoplastic material. An optical and acoustic warning device is therefore activated which signals to the operator that the operation has been completed. Detachment of the cover, provided with outer cover, from the rest of the sheet 2 is an operation which is advantageously performed automatically by the machine 10 by translating upwards, in the non-operating position, the cutting means with relative blade 112 and relative covering means 114', 114". To allow detachment of the heat-sealed sheet 2, when the tool 112 returns to the non-operating position, outside contact with the same, the means 114', 114" allow the sheet 2 to be folded, on both sides, if it is still in contact with the blade 112. The upward translation of the bar 110' allows detachment of the sealed sheet 2, and the remaining free part of the same, when the latter, coming into contact with the means 114', 114", does not adhere to the supporting portions provided.

Figure 3 illustrates a second embodiment of the machine 20 according to the present invention. In said embodiment the structure of the machine 20 is similar to the preceding one and, therefore, will not be described again. The cutting means 210 are modified, however. These are without partial covering means for the blade 212, unlike the means 110 described in the preceding embodiment. The cutting means 210 comprise pressure means 216 provided on one side of the blade 212 adapted to contact and block the sheet 2. These are provided by a metallic portion coupled to the bar 210' and integrally connected with the blade 112 during the translation operations. In particular, the pressure means 216 are positioned on the side of the blade 212 facing towards the book, but they could equally be located in a different position or produced using different materials.

Cutting of the sheet 2 is performed as described previously for the machine 10. Also in this case a control button (not illustrated) starts the heating of the blade 212 and the subsequent vertical translation of the bar 210' and, simultaneously, of the blade 212 according to modes and times programmed via the integrated circuit of the control means. Starting of the cycle determines heating of the blade 212 up to the set temperature, measuring the same by means of the thermocouple, applied on the blade 212, and sending the values recorded to the control means (not illustrated). Once the temperature has been reached, the control means command the downward translation of the cutting means and, at the same time, of the blade 212 and the pressure means 216 integrally connected with it. Said pressure means, by contacting the sheet 2, guarantee blocking thereof during the heat-sealing, thus avoiding possible movements of the sheet 2 or the introduction of air bubbles along the heat-sealed portion. The time the heated blade 212 remains in contact, in the operating position, is determined by the pre-defined temperature threshold and by the type of thermoplastic material used. The thermoplastic material can be identified either by programming the control means or by means of a selector (not illustrated) if provided.

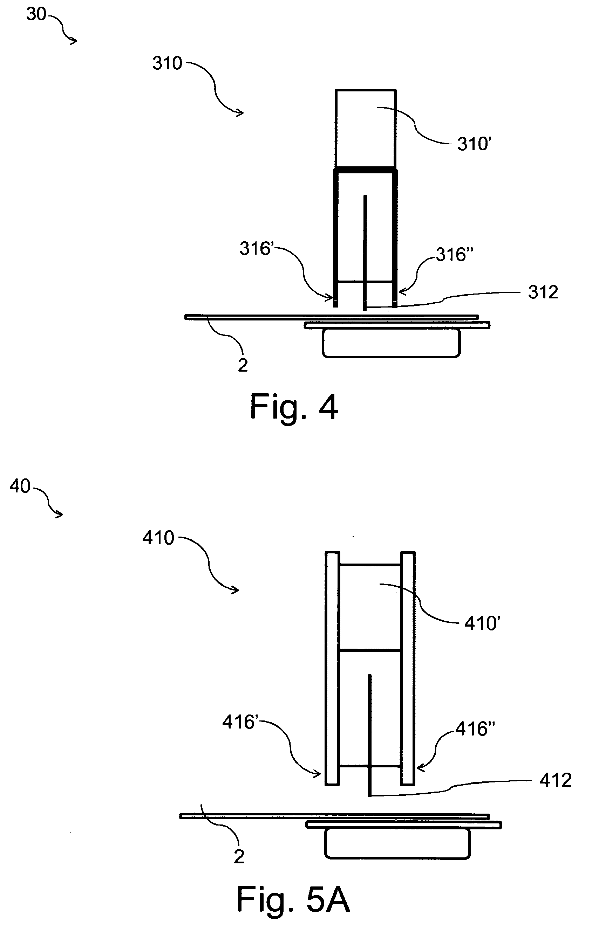

Typically, after approximately 1.5 seconds of contact between the hot blade 212 and the sheet 2 of thermoplastic material, the cutting of the same is completed. As specified previously, said period of contact can be shorter or longer in relation to the characteristics of the thermoplastic material. An optical and acoustic warning device is therefore activated which signals to the operator that the operation has been completed. Detachment of the cover, provided with outer cover, from the rest of the sheet is an operation which is advantageously performed automatically by the machine 20 by translating upwards, in the non-operating position, the cutting means 210 with the relative blade 112 and relative pressure means 216. Figure 4 illustrates a third embodiment of the machine 30 according to the present invention in which the structure of the same is similar to the preceding ones. In said embodiment the cutting means 310 are modified. These are without partial covering means for the blade 312, unlike the means 110 of the first embodiment. The cutting means 310 comprise pressure means 316', 316" provided on both sides of the blade 312 adapted to contact and block the sheet 2. These are provided by two metallic portions coupled to the bar 310' and integrally connected with the blade 312 during the translation operations.

Cutting of the sheet 2 is performed as described previously, activating a control button (not illustrated) which starts, firstly, heating of the blade 312 and then vertical translation of the bar 310' and, simultaneously, of the blade 312 according to modes and times programmed via the integrated circuit of the control means. Starting of the cycle determines heating of the blade 312 up to the set temperature, measuring the same by means of the thermocouple applied on the blade 312, and sending the values recorded to the control means. Once the temperature has been reached, the control means command the downward translation of the cutting means and, at the same time, of the blade 312 and the pressure means 316', 316" integrally connected with it. Said pressure means, by contacting the sheet 2, guarantee blocking thereof during the heat-sealing, avoiding possible movements of the sheet 2 or the introduction of air bubbles along the heat-sealed portion. The time the heated blade 312 remains in contact, in the operating position, is determined by the pre-defined temperature threshold and by the type of thermoplastic material used. The thermoplastic material can be identified either by programming the control means or by means of a selector (not illustrated) if provided.

Typically, after approximately 1.5 seconds of contact between the hot blade 312 and the sheet 2 of thermoplastic material, cutting of the same is completed. As specified previously, said period of contact can be shorter or longer in relation to the characteristics of the thermoplastic material. An optical and acoustic warning device is therefore activated which signals to the operator that the operation has been completed. Detachment of the cover, provided with outer cover, from the rest of the sheet is an operation which is advantageously performed automatically by the machine 30 by translating upwards, in the non-operating position, the cutting means 310 with the relative blade 312 and relative pressure means 316', 316". In this way the heat seal obtained is optimal and resistant even if subjected to high shear stress.

A further embodiment is illustrated in figures 5A-5C. Figure 5A illustrates a fourth embodiment of the machine 40 according to the present invention. In said embodiment the structure of the machine 40 is similar to the preceding structures and will therefore not be described again. The cutting means 410 are modified. These are without partial covering means for the blade 412, unlike the means 110 of the first embodiment. The cutting means 410 comprise pressure means 416', 416" provided on both sides of the blade 412 adapted to contact and block the sheet 2. These are provided by two metallic portions movably coupled with the bar 410' and therefore sliding with respect to the blade 412 during the translation and heat sealing operations. In particular, activation of the means 416', 416" is determined by the control means (not illustrated) to which they are operatively connected.

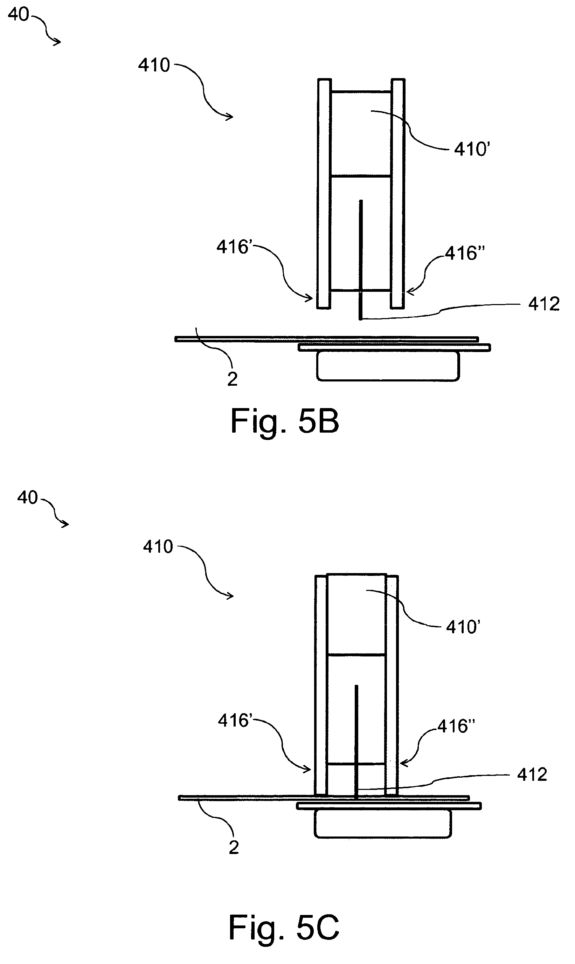

Cutting of the sheet 2 is performed as described previously for the preceding embodiments. Also in this case a control button (not illustrated) starts heating of the blade 412 and simultaneously causes the vertical translation of the pressure means 416', 416" until contact is made with the sheet 2 (as illustrated in Figure 5B). Once the heating has been completed, the vertical translation of the bar 410' and simultaneously of the blade 412 is also performed according to modes and times programmed via the integrated circuit of the control means. Starting of the cycle determines heating of the blade 412 up to the set temperature, measuring the same by means of the thermocouple applied on the blade 412, and sending the values recorded to the control means. Once the temperature has been reached, the control means command the downward translation of the cutting means and, at the same time, of the blade 412 since the pressure means 416', 416" are already in contact with the sheet 2 (as illustrated in Figure 5C). Said pressure means, by contacting the sheet 2, guarantee blocking thereof during the heat-sealing, thus avoiding possible movements of the sheet 2 or the introduction of air bubbles along the heat-sealed portion. The time the heated blade 412 remains in contact, in the operating position, is determined by the pre-defined temperature threshold and by the type of thermoplastic material used. The thermoplastic material can be identified either by programming the control means or by means of a selector (not illustrated) if provided. Typically, after approximately 1.5 seconds of contact between the hot blade 412 and the sheet 2 of thermoplastic material, cutting of the same is completed. As specified previously, said period of contact can be shorter or longer in relation to the characteristics of the thermoplastic material. An optical and acoustic warning device is therefore activated which signals to the operator that the operation has been completed. Detachment of the cover, provided with outer cover, from the rest of the sheet is an operation which is advantageously performed automatically by the machine 40 by translating upwards, in the non-operating position, firstly the cutting means 410 with the relative blade 412 and then the pressure means 416', 416", sliding on the bar 410'.

In this way the heat seal obtained is optimal and resistant even if subjected to high shear stress.

The machine for covering paper articles, according to the present invention, provides a high level of automation of the operations necessary for applying the cover. Manual activation of the cutting means and the manual exercise of an adequate pressure of the same against the sheet to be cut are eliminated. This type of activation is performed automatically by the programmable heating/translation sequences of the cutting means, in relation to the material used and, therefore, the heating temperature of the cutting tool. In any case the manual activity of the operator is limited to a correct positioning of the sheet with respect to the cutting tool and positioning of the book on the sheet, in order to obtain the desired cutting lines. The advantage with respect to the known equipment is therefore very significant. Furthermore the possibility of setting different temperatures for heating of the cutting tool allows heat sealing to be obtained on any type of flexible thermoplastic material, increasing the possibilities of use of the machine. In addition, the possibility of accurately determining the heating temperature allows use of the machine in very different ambient conditions while constantly ensuring the same optimal heat sealing characteristics.

The machine for covering paper articles according to the present invention provides an effective long lasting seal, better than the machines in the known art and resistant to shear stress. Blocking of the sheet to be sealed, on one or both sides, allows the same to be positioned correctly, without movements during the sealing operations and avoiding the introduction of air bubbles, or foreign materials, into the heat sealed portion.

## Claims

1. Machine (10) for covering paper articles (1) with a sheet (2) of flexible thermoplastic material, comprising:
• cutting means (110), comprising a bar (110') provided with a heatable cutting tool (112) able to assume an operating position, in contact with said sheet (2), and a non-operating position, outside contact with said sheet (2);
• control means (120), able to determine the operating position of said cutting tool (112) for the heat sealing and/or cutting of said sheet (2);
said machine (10) being **characterised in that** it comprises means for controlling the temperature of said cutting tool (112), operatively connected with said control means (120) to determine the operating position when a pre-defined temperature threshold is reached by said cutting tool (112).

2. Machine (10) as claimed in claim 1, **characterised in that** said temperature control means comprise at least one temperature sensor (112') applied and/or operatively connected to said cutting tool (112).

3. Machine (10) as claimed in claim 1 or 2, **characterised in that** it comprises means (130) for the adjustment of said temperature threshold by the user operatively connected with said control means (120).

4. Machine (10) as claimed in one or more of the claims from 1 to 3, **characterised in that** it comprises timer means, operatively connected with said control means (120), for determining the time said cutting tool (112) is maintained in the operating position, said time being determined by said predefmed temperature threshold and/or by the type of said thermoplastic material to be used.

5. Machine (10) as claimed in one or more of the claims from 1 to 4, **characterised in that** said cutting tool (112) is a blade which extends, at least partially, throughout the extension of said bar (110').

6. Machine (10) as claimed in one or more of the claims from 1 to 5, **characterised in that** said cutting means (110) comprise means (114', 114") for partially covering at least one side of said cutting tool (112), to allow detachment of the heat-sealed sheet (2) when said tool (112) returns to the non-operating position.

7. Machine (10) as claimed in claim 6, **characterised in that** said covering means (114', 114") are integrally connected with and partially cover both sides of said cutting tool (112).

8. Machine (20; 30; 40) as claimed in one or more of the claims from 1 to 7, **characterised in that** said cutting means (210; 310; 410) comprise pressure means (216; 316', 316"; 416', 416") provided on at least one side of said cutting tool (212; 312; 412) for contacting and/or blocking said sheet (2).

9. Machine (20; 30) as claimed in claim 8, **characterised in that** said pressure means (216; 316', 316") follow the movement of said cutting tool (212; 312).

10. Machine (40) as claimed in claim 8, **characterised in that** said pressure means (416', 416") are movable with respect to said cutting tool (412).

11. Machine (30; 40) as claimed in one or more of the claims from 8 to 10, **characterised in that** said pressure means (316', 316"; 416', 416") are provided on both sides of said cutting tool (312; 412).

## Patentansprüche

1. Maschine (10) zum Bedecken von Papierartikeln (1) mit einem Bogen (2) eines flexiblen thermoplastischen Materials, mit:
- einem Schneidmittel (110) mit einer Stange (110'), die mit einem beheizbaren Schneidwerkzeug (112) versehen ist, das in der Lage ist, eine Betriebsposition in Kontakt mit dem Bogen (2) und eine Nicht-Betriebsposition außer Kontakt mit dem Bogen (2) anzunehmen,
- einem Steuerungsmittel (120), das in der Lage ist, die Betriebsposition des Schneidwerkzeugs (112) für das Versiegeln durch Wärme und/oder für das Schneiden des Bogens (2) zu bestimmen,
wobei die Maschine (10) **dadurch gekennzeichnet ist, dass** sie ein Mittel aufweist, um die Temperatur des Schneidwerkzeugs (112) zu steuern, das operativ mit dem Steuerungsmittel (120) verbunden ist, um die Betriebsposition zu bestimmen, wenn ein vorher festgelegter Temperaturschwellenwert durch das Schneidwerkzeug (112) erreicht wird.

2. Maschine (10) nach Anspruch 1, **dadurch gekennzeichnet, dass** das Temperatursteuerungsmittel wenigstens einen Temperatursensor (112') aufweist, der an dem Schneidwerkzeug (112) vorgesehen und/oder damit operativ verbunden ist.

3. Maschine (10) nach Anspruch 1 oder 2, **dadurch gekennzeichnet, dass** sie ein Mittel (130) zum Einstellen des Temperaturschwellenwerts durch einen Benutzer hat, das operativ mit dem Steuerungsmittel (120) verbunden ist.

4. Maschine (10) nach einem der Ansprüche 1 bis 3, **dadurch gekennzeichnet, dass** sie ein Zeitmessmittel aufweist, das operativ mit dem Steuerungsmittel (120) verbunden ist, um die Zeit zu bestimmen, welche das Schneidwerkzeug (112) in der Betriebsposition gehalten wird, wobei die Zeit durch den vorher festgelegten Temperaturschwellenwert und/oder durch die Art des verwendeten thermoplastischen Materials bestimmt wird.

5. Maschine (10) nach einem oder mehreren der Ansprüche 1 bis 4, **dadurch gekennzeichnet, dass** das Schneidwerkzeug (112) eine Klinge ist, die sich wenigstens teilweise durch die Erstreckung der Stange (110') erstreckt.

6. Maschine (10) nach einem oder mehreren der Ansprüche 1 bis 5, **dadurch gekennzeichnet, dass** das Schneidmittel (110) Mittel (114', 114") zum teilweisen Bedecken von wenigstens einer Seite des Schneidwerkzeugs (112) aufweist, um das Ablösen des wärmeversiegelten Bogens (2) zu ermöglichen, wenn das Werkzeug (112) in die Nicht-Betriebsposition zurückkehrt.

7. Maschine (10) nach Anspruch 6, **dadurch gekennzeichnet, dass** das Bedeckmittel (114', 114") einstückig verbunden ist mit beiden Seiten des Schneidwerkzeugs (112) und sie teilweise bedeckt.

8. Maschine (20, 30, 40) nach einem oder mehreren der Ansprüche 1 bis 7, **dadurch gekennzeichnet, dass** das Schneidmittel (210, 310, 410) ein Druckmittel (216, 316', 316", 416', 416") aufweist, das an wenigstens einer Seite des Schneidwerkzeugs (212, 312, 412) vorgesehen ist, um den Bogen (2) zu kontaktieren und/oder zu blockieren.

9. Maschine (20, 30) nach Anspruch 8, **dadurch gekennzeichnet, dass** das Druckmittel (216, 316', 316") der Bewegung des Schneidwerkzeugs (212, 312) folgt.

10. Maschine (40) nach Anspruch 8, **dadurch gekennzeichnet, dass** das Druckmittel (416', 416") beweglich bezüglich des Schneidwerkzeugs (412) ist.

11. Maschine (30, 40) nach einem oder mehreren der Ansprüche 8 bis 10, **dadurch gekennzeichnet, dass** das Druckmittel (316', 316", 416', 416") auf beiden Seiten des Schneidwerkzeugs (312, 412) vorgesehen ist.

## Revendications

1. Machine (10) pour couvrir des articles en papier (1) avec une feuille (2) de matériau thermoplastique flexible, qui comprend :
- un moyen de découpe (110), qui comprend une barre (110') munie d'un outil de découpe chauffant (112) capable d'adopter une position de fonctionnement, en contact avec ladite feuille (2), et une position de non-fonctionnement, sans contact avec ladite feuille (2) ;
- un moyen de commande (120), capable de déterminer la position de fonctionnement dudit outil de découpe (112) pour le thermoscellage et/ou la découpe de ladite feuille (2) ;
ladite machine (10) étant **caractérisée en ce qu'**elle comprend un moyen de régulation de la température dudit outil de découpe (112), relié fonctionnellement audit moyen de commande (120) afin de déterminer la position de fonctionnement lorsqu'un seuil de température prédéfini est atteint par ledit outil de découpe (112).

2. Machine (10) selon la revendication 1, **caractérisée en ce que** ledit moyen de régulation de la température comprend au moins un capteur de température (112') appliqué et/ou relié audit outil de découpe (112).

3. Machine (10) selon la revendication 1 ou 2, **caractérisée en ce qu'**elle comprend un moyen (130) destiné à permettre à l'utilisateur fonctionnellement relié audit moyen de commande (120) de régler ledit seuil de température.

4. Machine (10) selon une ou plusieurs des revendications 1 à 3, **caractérisée en ce qu'**elle comprend un minuteur, relié fonctionnellement audit moyen de commande (120), afin de déterminer la durée pendant laquelle ledit outil de découpe (112) est maintenu dans la position de fonctionnement, ladite durée étant déterminée par ledit seuil de température prédéfini et/ou par le type dudit matériau thermoplastique à utiliser.

5. Machine (10) selon une ou plusieurs des revendications 1 à 4, **caractérisée en ce que** ledit outil de découpe (112) est une lame qui s'étend au moins partiellement dans l'extension de ladite barre (110').

6. Machine (10) selon une ou plusieurs des revendications 1 à 5, **caractérisée en ce que** ledit moyen de découpe (110) comprend un moyen (114', 114") destiné à recouvrir partiellement au moins un côté dudit outil de découpe (112), afin de pouvoir détacher la feuille thermoscellée (2) lorsque ledit outil (112) revient en position de non-fonctionnement.

7. Machine (10) selon la revendication 6, **caractérisée en ce que** ledit moyen de recouvrement (114', 114") est intégralement relié à et recouvre partiellement les deux côtés dudit outil de découpe (112).

8. Machine (20 ; 30 ; 40) selon une ou plusieurs des revendications 1 à 7, **caractérisée en ce que** ledit moyen de découpe (210 ; 310 ; 410) comprend un moyen de pression (216 ; 316', 316" ; 416', 416") prévu sur au moins un côté dudit outil de découpe (212 ; 312 ; 412) destiné à faire contact et/ou à bloquer ladite feuille (2).

9. Machine (20 ; 30) selon la revendication 8, **caractérisée en ce que** ledit moyen de pression (216 ; 316', 316") suit le mouvement dudit outil de découpe (212 ; 312).

10. Machine (40) selon la revendication 8, **caractérisée en ce que** ledit moyen de pression (416', 416") est mobile par rapport audit outil de découpe (412).

11. Machine (30 ; 40) selon une ou plusieurs des revendications 8 à 10, **caractérisée en ce que** ledit moyen de pression (316', 316" ; 416', 416") est prévu des deux côtés dudit outil de découpe (312 ; 412).
